# EUROPEAN PATENT SPECIFICATION

(11) **EP 1 469 764 B1**
(45) Date of publication and mention of the grant of the patent: **27.05.2009**
(21) Application number: 01969962.8
(22) Date of filing: 24.09.2001
(51) Int. Cl.: A47J 37/04

(54) **COOKING CONTROL AID**
KOCHHILFSMITTEL
AUXILIAIRE DE REGULARISATION DE CUISSON

(30) Priority: 26.09.2000 GB 0023576
(43) Date of publication of application: 27.10.2004
(73) Proprietor: McKeand, Peter Wilson, Llantarnam Torfaen NP44 3HS (GB)
(72) Inventor: BURGESS, Rosemary Jacynth, Fionnphort PA66 6BT, Isle of Mull (GB)
(86) International application number: PCT/GB2001/004243
(87) International publication number: WO 2002/026092

(56) References cited:
- WO-A-00/33711
- FR-A- 1 409 366
- GB-A- 2 232 876
- US-A- 1 359 749

## Description

This invention relates to a mechanical means of supporting and or holding steady food items during cooking by frying, grilling or barbecueing.

It is known that with a number of types of food items, for example chops or steaks, it is often desired that one edge or edges (typically the fatty or skin-containing edge) may be desired to be crisper and more cooked than the balance of the food item, therefore preferably requiring more cooking heat to be applied for a time to it (or them) than is applied to the balance of the food item.

The invention initially relates therefore to a means of supporting or holding such food items (for the purpose of example being but not restricted to being such as meat chops or steaks), in a position in relation to the cooking heat source, such that their edges ("edges" being generally interpreted as the narrower edge section in relation to the width) receive part or all of the emitted heat from the source of cooking heat in such fashion as these edges are then cooked faster than the remainder of the food item, when otherwise the natural force of gravity would make impossible or inconvenient the maintenance of the food item in the desired and necessary cooking position.

In turn this allows for these edges to be cooked to taste without major or any progress in the cooking of the remaining or central portions of the food items, for example resulting in the crisping of the edge of a meat chop whilst leaving more tender the main portion of the meat.

The mechanical supporting or holding of food items to avoid or minimise the necessity for their being potentially inconveniently handled and held manually on their edges throughout the duration of the cooking of their edges, also reduces the risk to an individual, consequent on such continuous manual holding, of being injured by splashing or emissions of hot frying fat or similar cooking materials. The invention in a further embodiment may additionally provide a direct means of preventing or minimising such dangerous emissions of hot fat which typically occur when heat sufficient for example for crisping is being applied directly to fat or skin.

Typically embodiments of the invention would in use rest on a frying pan, on a barbecue, or within a grill, but could also incorporate their own heat source and be embodied in a stand-alone cooking device.

Various embodiments of the invention, to be described herein, allow in addition for the varying of the retaining or holding means, or the enabling of adjustment to ensure the firm retaining or holding of a variety of thicknesses of food items, and allow also for further attachments and enhancements such as can generally enhance and make easier the selective or entire cooking of parts of food items, through retaining them securely in relation to the source of cooking heat regardless of whether one part of the food item is desired to receive selectively more cooking heat than other parts.

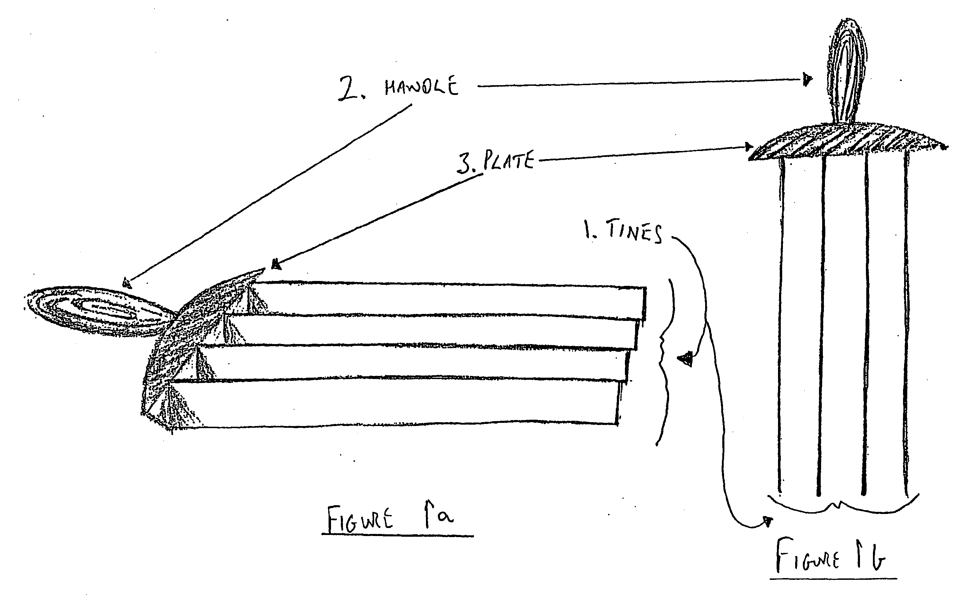

In its potentially simplest form for use in conjunction with a frying pan or similar pan and as illustrated in perspective in Figure 1a, the invention can comprise an array of tines 1, of two or more in number (four shown for purposes of illustration), and usually attached to a supporting handle 2 each tine being capable, in conjunction with its neighbouring tine, of supporting an item being cooked sufficiently vertical to the source of cooking heat for the purpose of concentrating the cooking heat on the desired edge rather than generally on a wider area or the main bulk of the item. Typically therefore these tines would regardless of their thickness or construction, have a height at right angles when in use to the heat source sufficient to hold the food item reasonably vertical for the achievement of the cooking purpose. If of solid material, the tines would effectively be plates with their lower longer narrow edges being during use adjacent to the base of the (frying) pan. Means are provided to assist the balancing of this embodiment in a reasonably secure fashion on part of the rim of the pan, for example by the plate 3.

Figure 1b illustrates the same embodiment viewed from above, showing the tines 1, the handle 2, and the plate 3.

The invention may as above be of solid and homogeneous construction in order to minimise the number of edges, angles or corners required to be cleaned in any washing-up process, as such disadvantageous edges, angles or corners might be considered to arise from a perforated, wire or grille construction. However it may be constructed from any material meeting the general structural and hygienic requirements of cooking utensils exposed to heat and may similarly be coated in any appropriate material.

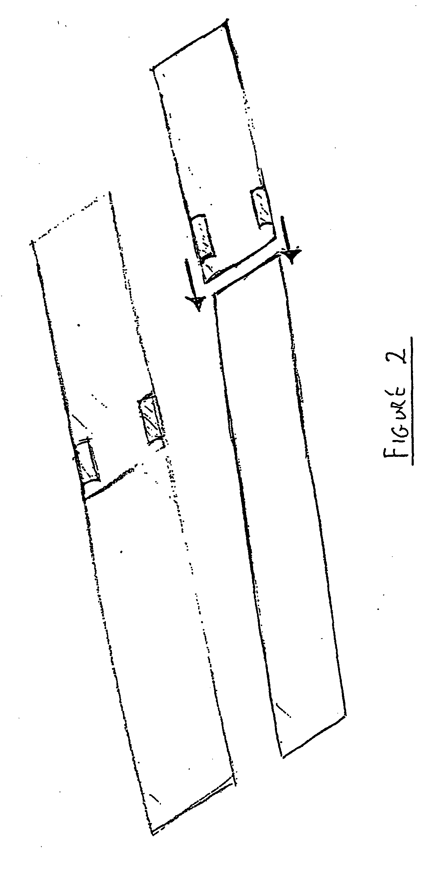

The device may satisfactorily be entirely non-adjustable but for use with a frying pan and to enhance the capability of the device to be balanced steadily on the upper edges of the pan, the invention may in one embodiment be fitted with extensible supports fitted either to the tines or to other parts of the device, such as to provide an enhanced balancing fit to the size of pan in use, allowing balance of the device on opposite sides of the pan. An example of a potential mechanism for a sliding extension of a tine is shown in Figure 2. (Stops may be incorporated but are not illustrated.) Additionally or alternatively to this embodiment, forms of clips (extensible or otherwise) might be fitted such as to grip the pan for additional stability during cooking. It will be appreciated that such extensions or clips, whether fixed or adjustable, might also be commercially supplied as optional extras to a main device though as an integral part of an embodiment of the invention.

It will be appreciated that the invention is capable of being used with any depth of pan, through varying the method by which it is supported on (and in) the pan or attached to the pan.

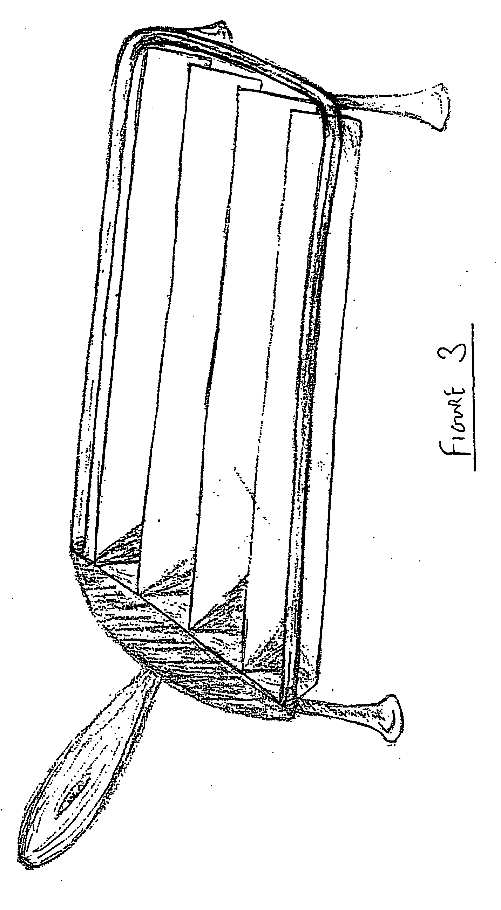

Embodiments of the invention are equally useful and capable of being used in conjunction with the heat projected by a grill as they are with the contact heat provided by the surface of a frying pan. In such an embodiment the device may be fitted with supporting legs or other bracing or mounting means, which may potentially be extensible, such as to allow the device to be mounted or stood below the grill (or in appropriate relation to any other direction of cooking heat source of whatever kind). An example with non-extending supporting legs appears as Figure 3. In further embodiments the device might additionally or alternatively be fitted with a number of supporting or securing methods specifically bespoke to operation with a variety of proprietary individual existing or future grills, grill pans, or similar cooking apparatus. This scope, for embodiments designed for use with specific or proprietary grill or similar equipment, applies equally to scope for fitments optional or otherwise tailored for use with specific or proprietary frying pan types or similar equipment or barbecues.

It will be appreciated that a further embodiment can provide a device for use with barbecues, in which the portions of the food item(s) desired to receive enhanced cooking would be aimed in a downward trajectory as with the device when used in conjunction with a frying pan, but a different means of sufficiently securely balancing and mounting the device would be incorporated such as to take account of steadying the device on a barbecue grille, as opposed to on the rim of a frying pan.

It will also be appreciated that the extensibility of the tines (for example using the mechanism shown in Figure 2) has benefits in general use with all sources of cooking heat including grills and barbecues as well as frying or similar pans, allowing a tailoring of the device to the host cooking unit.

In any embodiment the height of the tines (when embodied as a homogeneous plate) may also be made sufficient so as to contribute to shielding from the heat source most or all of the bulk of the food item whose cooking it is not desired to increase in relation to that of the edge or edges, thereby increasing the differential, in relation to the main body of the item, in the rate of cooking of the exposed part or area.

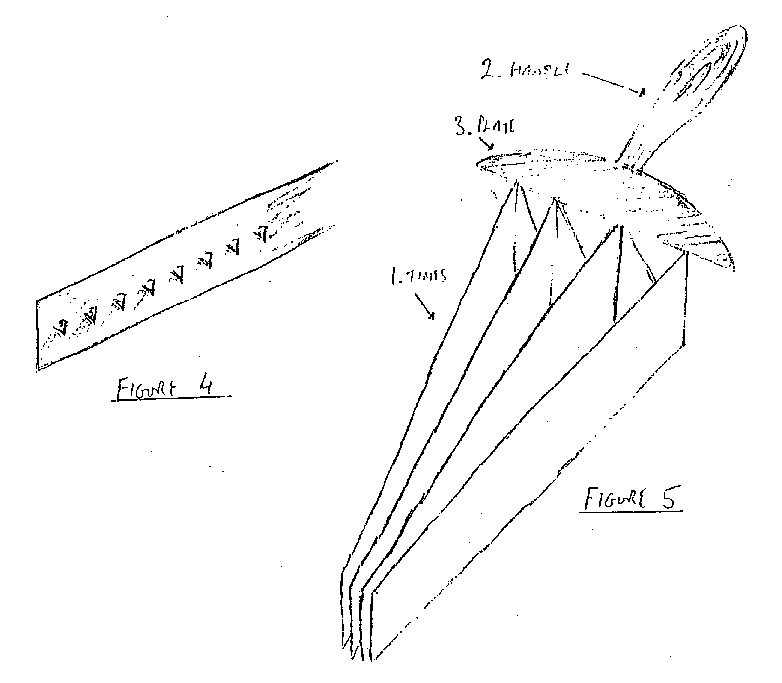

The invention, independently of or in conjunction with embodiments named above, allows for the varying of the distance between the food retaining faces of the tines, so as either to make each of the slots available for the insertion of food items capable of having differing widths in relation to others on the same device, or to make all capable of materially identical alteration of width. A particular embodiment could allow for the bringing closer of the food item-retaining faces of the tines after the food items had been inserted by a screwing or tightening mechanism, thus allowing increasingly firm holding of the food items by the device. The firmness of this grip may in any embodiment additionally be enhanced by the incorporation of spikes or raised portions (see Figure 4) on the opposing sides of the tines. In this form or otherwise a further embodiment would allow use of the device for dipping a part only of a food item into the deep fat or oil used typically in a deep frying device, such as to allow concentration of the cooking heat on one part of the food item only, regardless of the spatial proportion of the part in relation to the food item as a whole. A further embodiment would allow for one or more mechanisms performing the actions of an automatically functioning spring such as to draw closer the food item retaining tines, thereby gripping the food item more securely and enhancing its capability to be held as near vertical as possible (or in any other desired position) to the cooking heat source.

It will be appreciated that this spring-loading could be designed so as either to draw all the tines together at a uniform rate of reduction of the distance between them, or by exerting a more general pressure to tend to draw them together so that the distance between them is regulated for practical purposes solely by the thickness of the food item(s) held between each opposing pair of tines. Catches could be incorporated to hold open and apart the tines until it were desired that they be pressed toward each other, in order to facilitate the loading of the device with one or more food items. Catches may also be incorporated to hold tines in a firmly gripping position.

A further embodiment incorporating the use of a spring-type pressure such as to assist in the gripping of the food item (with or without further gripping means such as spikes or raised portions of the tines) comprises the use of tines prongs made from a tough material with spring capacity tending to reform to its original shape after distortion, for example 302 Grade Stainless steel, in which during the at-rest position, at one end of the array of tines the tines are closer to each other than at the other end. Food items inserted between the tines towards the end of narrower gaps would thus tend to be held by the natural spring force of the tines towards each other, the device being in this way self adjusting as to the thickness of the individual food item(s). Figure 5 illustrates. It will be appreciated that there is a convenience in first inserting the food item in the wider gap between tines and then pushing it towards the narrower gap where the said spring action will increasingly hold it securely.

It will be appreciated that use of the invention may not therefore be entirely restricted to the enhancement of cooking of edges of food items essentially having a width, thickness and length (however varying), but may also be used in appropriate embodiments to enhance the cooking of part only of items of any shape, regardless of the relation of the part to the overall item.

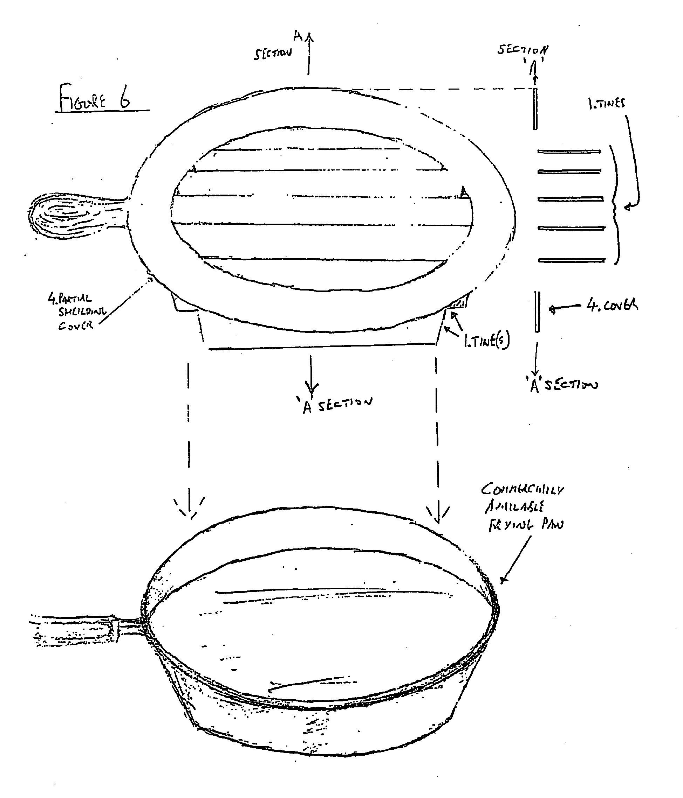

A further embodiment of the invention relates to the introduction of provision for a potentially significant degree of protection from risk of injury from spattering of hot cooking fat or oil or similar cooking material. Figure 6 illustrates an embodiment of the device for use in conjunction with a frying pan, whereby, apart from the gaps of the retaining slots into which the food items are inserted so as to slide between the tines the pan is partially or completely covered by the structure comprising or mounting also the tines. It will be appreciated that this assists in enabling a very high heat to be applied briefly or at length for the purposes for example of crisping intensively or rapidly an edge, whilst minimising risk of injury to the person doing the cooking. The partial shielding cover 4 illustrated in Figure 6, with its large central hole through which food items can be inserted into the slots between the tines, is shown in this particular shape only for convenience of illustrating the principle. Any area can be covered provided only that it does not interfere with the insertion or withdrawing of the food items.

Potentially this cover may be transparent in nature, so as to increase ease of oversight of the progress of the cooking. It will be appreciated that the form of covering could also be adjustable, for example by sliding within such as edge grooves, or be even demountable. It will however also be obvious and appreciated in respect of minimising emissions of hot fats or oils or similar that the position of the tines, in their customarily vertical plane to the base of the pan, will enable them to act very effectively as baffles in minimising such emissions and that this function is analagous in benefit to such as might be provided by a transparent cover.

It will be seen that Figure 6 illustrates also how a device comprising such an embodiment may simply be lowered onto the top of a frying pan so that the tines are lowered into the body of the pan until the upper part of the device is resting on the rim of the pan.

A further embodiment would allow for the partial rotation of the edges of the food items in relation to the cooking heat or source of heat, to allow for example increasing the regular cooking of the edge of a pork chop which may be partially curved. This may in one embodiment simply be achieved by a means of applying weight at one or other ends of the food item(s), which weight may take the form of a weighted structure attached to and swivelling upon the embodiment thereby forcing down the end of the food item(s), though more elaborate retaining and mechanical means may also be incorporated and employed.

A further embodiment lying within the scope of the invention (ie the provision of the ability to leave unmanned a food item to be cooked in one aspect only when otherwise the natural action of gravity would prevent the cooking solely or principally of the desired area alone) is a device similar to conventional tongs but with potentially more than two arms and with the ability to lock the arms (tines) in position once the food item(s) had been gripped. By means of interconnected trellis-type levers it is also possible to ensure that the gripping arms (tines) remain parallel to each other whether closed or open. Further, a suitable plate or other area to come in supporting contact with the rim of a pan or the base of a grill pan, could be provided as in other embodiments to give adequate stability during the cooking.

Given embodiments listed herein, in particular but not limited to those which allow for the firm gripping of an array of food items as opposed to simply balancing them in an approximate vertical plane to the origin of the cooking heat source, it will also be approciated that a further embodiment of the invention would be particularly suitable for the cooking of items held over a mesh or bar grille itself overlying the cooking heat source, where otherwise the items might due to their size fall through the gaps in the mesh or between the bars. The further convenience, of providing a device whereby many food items for cooking can individually and simultaneously be moved and controlled in relation to the cooking heat source, will also be apparent independently of or in conjunction with the embodiments described herein.

It will be appreciated that a number of known manufacturing processes (for example metal pressing, casting or other forming) may be used for the production of the invention and its potential embodiments, and that a number of materials (including non-metallic) may be used in their construction. Embodiments may be constructed and assembled from one or more component parts (or unformed raw material blanks) with known and standard fixing methods (for example welding or riveting).

It will also be appreciated that embodiments of the invention can be supplied in part-assembled component form, such as to allow the user to assemble a version that fits the dimensions of their own existing cooking apparatus.

### DRAWINGS AND ILLUSTRATIONS

NOTE ON DRAWINGS: All drawings are for purposes of illustrating examples only and are not therefore necessarily indicative of precise dimensioning or detailed construction. It should be noted additionally that quantities or sizes or distancing of tines suitable or desirable for use in embodiments of the invention are not restricted to the quantities or sizes or distancing of tines drawn in these illustrations.

Illustrations (all indexed in the above text) are as follows:
- Fig. 1:: Figure la: a perspective view of a simple embodiment of the device as can be made from a single sheet of metal (plus handle) for use in a frying pan. The four example tines are indicated [1], the handle [2], and an intervening plate [3] connecting the tines to the handle and providing a means of balancing supporting on one portion of the rim of the frying pan. Figure 1b: a typical view from above of the item described for Figure 1a. (Page 8 hereof)
- Fig. 2:: A simple extension means for allowing the lengthening for practical purposes of either one or more the array of tines or of an element of the structure on which they are mounted, whilst retaining functional integrity of the overall device. (Page 9 hereof.)
- Fig. 3:: An illustration of a potential embodiment for use when placed on a grill pan and beneath the grilling heat, also as with Figures 1 and 2 above with four tines though with an outer rim for exemplified functional structural purposes. The wide (belling) feet indicate a logical accomodation of the possibly wide gaps between the physical elements of a grille on a grill pan. (Page 10 hereof.)
- Fig. 4:: Illustration of how the surface of a metal plate may be formed to increase the capacity of the said plate (tine as described in this invention) to grip an item placed against it, especially when that item is forced against it by another plate (tine). (Page 11.)
- Fig. 5:: Illustration of the at-rest position of the supporting or holding tines comprised in an embodiment in which a natural inward or gripping pressure is produced and maintained by construction of the device from a spring material such as 302 Stainless Steel. (Page 11 hereof.)
- Fig. 6:: Illustration of an embodiment additionally providing protection from hot fat emissions, also showing positioning with a frying pan. As for Figure 1, tines 1 handle 2 and supporting/intervening plate 3 are shown for the purposes of an example, as in addition is indicated partial shielding cover 4. (Page 12.)

## Claims

1. Device for holding food items in relation to a source of heat comprising an array of tines (1) having the form of plates, **characterised in that** there is incorporated a means for mechanically drawing and/or tightening said plates closer in relation to each other.

2. Device according to claim 1 comprising a means of spring-loading the tines;

3. Device acccording to claim 2, wherein the tines are spring-loaded by the natural spring force of the tines towards each other;

4. Device according to any of claims 1 or 2 in which the holding function of the tines is enhanced by embossing, spiking or otherwise roughening part or all of the surface of the tines;

5. Device according to anyone of the previous claims, wherein the array of tines is attached to a supporting handle (2);

6. Device according to anyone of the previous claims including a mechanism to allow extension of the tines;

7. Device according to anyone of the previous claims comprising supporting legs;

8. Device acccording to anyone of the previous claims comprising cupping or securing means specifically bespoke to operation with a variety of proprietary individual existing or future grills, grill pans, or similar cooking apparatus.

## Patentansprüche

1. Vorrichtung zum Halten von Nahrungsmittelobjekten in Bezug auf eine Wärmequelle, die eine Anordnung von Zinken (1) umfasst, welche die Form von Platten haben, **dadurch gekennzeichnet, dass** ein Mittel zum mechanischen Anziehen und/oder Verengen der Platten in Bezug aufeinander enthalten ist.

2. Vorrichtung gemäß Anspruch 1, die ein Mittel zur Federbelastung der Zinken umfasst.

3. Vorrichtung gemäß Anspruch 2, wobei die Zinken durch die natürliche Federkraft der Zinken zueinander federbelastet sind.

4. Vorrichtung gemäß einem der Ansprüche 1 oder 2, wobei die Haltefunktion der Zinken durch Prägung, Zackenbildung oder eine andersartige Aufrauhung eines Teils der Oberfläche oder der gesamten Oberfläche der Zinken verbessert ist.

5. Vorrichtung gemäß einem der vorstehenden Ansprüche, wobei die Anordnung der Zinken an einem Stützgriff (2) befestigt ist.

6. Vorrichtung gemäß einem der vorstehenden Ansprüche, die einen Mechanismus enthält, welcher das Ausfahren der Zinken ermöglicht.

7. Vorrichtung gemäß einem der vorstehenden Ansprüche, die Stützbeine umfasst.

8. Vorrichtung gemäß einem der vorstehenden Ansprüche, die Klemm- oder Sicherungsmittel umfasst, welche speziell nach Maß gefertigt sind, um mit einer Auswahl von gesetzlich geschützten einzelnen existierenden oder zukünftigen Grills, Grillpfannen oder ähnlichen Kochapparaten zusammenzuwirken.

## Revendications

1. Dispositif pour tenir des aliments par rapport à une source de chaleur comportant un ensemble de dents (1) ayant la forme de plaques, **caractérisé en ce qu'**un moyen est incorporé pour tirer et/ou resserrer mécaniquement lesdites plaques de façon plus rapprochée les unes des autres.

2. Dispositif selon la revendication 1 comportant un moyen pour que les dents soient à ressort ;

3. Dispositif selon la revendication 2, dans lequel les dents sont à ressort par la force de ressort naturelle des dents les unes en direction des autres ;

4. Dispositif selon n'importe lesquelles des revendications 1 ou 2 dans lequel la fonction de tenue des dents est améliorée en bosselant, en munissant de pointes ou sinon en rendant rugueuse une partie ou l'intégralité de la surface des dents ;

5. Dispositif selon n'importe laquelle des revendications précédentes, dans lequel l'ensemble de dents est attaché à une poignée de soutien (2) ;

6. Dispositif selon n'importe laquelle des revendications précédentes comprenant un mécanisme pour permettre l'extension des dents ;

7. Dispositif selon n'importe laquelle des revendications précédentes comportant des pieds de soutien ;

8. Dispositif selon n'importe laquelle des revendications précédentes comportant un moyen de fixation ou d'assujettissement conçu spécifiquement pour fonctionner avec divers grils, poêles à fond cannelé, ou appareils de cuisson similaires existants ou futurs individuels propriétaires.
